(19) Europäisches Patentamt
European Patent Office
Office européen des brevets

(11) **EP 0 986 872 B1**

(12) **EUROPÄISCHE PATENTSCHRIFT**

(45) Veröffentlichungstag und Bekanntmachung des Hinweises auf die Patenterteilung:
**28.08.2002 Patentblatt 2002/35**

(21) Anmeldenummer: **98925591.4**

(22) Anmeldetag: **13.05.1998**

(51) Int Cl.$^7$: **H04L 9/06**

(86) Internationale Anmeldenummer:
**PCT/EP98/02803**

(87) Internationale Veröffentlichungsnummer:
**WO 98/057461 (17.12.1998 Gazette 1998/50)**

(54) **VORRICHTUNG ZUR DURCHFÜHRUNG EINES BLOCKCHIFFRIERVERFAHRENS**

DEVICE FOR CARRYING OUT A BLOCK CIPHER METHOD

DISPOSITIF DE MISE EN OEUVRE D'UN PROCEDE DE CODAGE DE BLOCS

(84) Benannte Vertragsstaaten:
**AT BE CH CY DE DK ES FI FR GB GR IE IT LI LU MC NL PT SE**

(30) Priorität: **07.06.1997 DE 19724072**

(43) Veröffentlichungstag der Anmeldung:
**22.03.2000 Patentblatt 2000/12**

(73) Patentinhaber: **Deutsche Telekom AG**
**53113 Bonn (DE)**

(72) Erfinder: **WINDIRSCH, Peter**
**D-63303 Dreieich (DE)**

(56) Entgegenhaltungen:
**EP-A- 0 454 187**      **DE-A- 4 016 203**

**Beschreibung**

Die Erfindung betrifft eine Vorrichtung zur Durchführung eines Blockchiffrierverfahrens mit einem Ver-/Entschlüsselungs-Rechenwerk, dem der zu chiffrierende Datenstrom der Wortbreite n zugeführt ist, gemäß Oberbegriff des Anspruchs 1.

Aus der DE 40 16 203 A1 ist eine gattungsgemäße Vorrichtung zur Durchführung eines Blockchiffrierverfahrens bekannt. Das bekannte Rechenwerk weist mehrere Ver-/Entschlüsselungselemente auf, die jeweils eine Stufe einer Rechenpipeline bilden. Die einzelnen Stufen der Rechenpipeline können mit unterschiedlichen Schlüsseln arbeiten.

Nachteilig bei der bekannten Vorrichtung ist, daß unterschiedliche Betriebsarten nicht durchführbar sind, wobei insbesondere die aus dem ISO-10116 Standard definierten Betriebsarten (ECB, CBC, CBC-MAC, CFB, OFB) zu nennen sind.

EP 0 454 187 offenbart einen für Chiffriervorgänge verwendbaren Zufallsdatengenerator mit einem Rechenwerk in Pipeline-Struktur, das in mehrere Verarbeitungskanäle aufgegliedert ist. Bei der Erzeugung der Zufallsdaten in diesem Generator werden die Daten in allen Kanälen miteinander verknüpft. Eine zeitgleiche Verarbeitung von mehreren Strömen von Eingangsdaten ist nicht möglich.

Es ist daher Aufgabe der Erfindung, eine Vorrichtung der gattungsgemäßen Art anzugeben, mit der zeitgleich unterschiedliche Datenströme in verschiedenen ISO-10116 Betriebsarten ver-/entschlüsselt werden können.

Diese Aufgabe wird mit einer Vorrichtung zur Durchführung eines Blockchiffrierverfahrens gelöst, die die Merkmale des Anspruchs 1 aufweist. Erfindungsgemäß ist vorgesehen, daß einem Rechenwerk ein Exklusiv-Oder-Gatter vorgeschaltet ist, das eine bitweise Verknüpfung zweier Eingangsworte der Wortbreite n durchführt, wobei ein Eingang des Exklusiv-Oder-Gatters mit einer ersten Multiplexer-Vorrichtung und der zweite Eingang mit einer zweiten Multiplexer-Vorrichtung verbunden ist. Der ersten Multiplexer-Vorrichtung ist erfindungsgemäß der Eingangsdatenstrom zugeführt. Außerdem ist erfindungsgemäß vorgesehen, daß ein Eingang der zweiten Multiplexer-Vorrichtung mit einem Ausgang einer Zwischenspeichervorrichtung verbunden ist, die zur Speicherung mehrerer Start- und Initialisierungswerte für das Chiffrierverfahren sowie von Dateneingangs- und Rückkopplungswerten ausgebildet ist. Dadurch, daß in der Zwischenspeichervorrichtung mehrere Start- und Initialisierungswerte bezieungsweise Dateneingangs- und Rückkopplungswerte für die Chiffrierverfahren bereitgestellt werden, ist es in vorteilhafter Weise möglich, eine einzige Vorrichtung bereitzustellen, die in unterschiedlichen Betriebsarten betrieben werden kann. Darüber hinaus ist es auch möglich, durch das Zwischenspeichern von Dateneingangs- und Rückkopplungswerten mit der erfindungsgemäß vorgesehenen Zwischenspeichereinrichtung, das innerhalb eines zu chiffrierenden Datenstroms auf eine andere Betriebsart umgeschaltet werden kann. Mit der erfindungsgemäßen Vorrichtung ist es daher möglich, die ISO-10116 Betriebsarten hardwaremäßig bereitzustellen. Durch die erfindungsgemäße Auslegung der Datenpfade zwischen den dem Rechenwerk vorgeschalteten Einrichtungen, insbesondere des Exklusiv-Oder-Gatters, einer ersten und zweiten Multiplexer-Vorrichtung, und durch das erfindungsgemäße Vorsehen einer Zwischenspeichereinrichtung wird es darüber hinaus auch möglich, zeitgleich unterschiedliche Datenströme in verschiedenen ISO-10116 Betriebsarten zu ver- und/oder entschlüsseln. Weiterhin ist ein konfliktfreier Wechsel der Betriebsarten bei den verschiedenen zu bearbeitenden Datenströmen möglich, ohne dabei die Bearbeitung zu unterbrechen. Insbesondere dadurch, daß eine Zwischenspeichervorrichtung vorgesehen ist, ist es auch möglich, die Bearbeitung einer Vielzahl von Datenströmen im Zeitmultiplexbetrieb zu nutzen. Außerdem wird in vorteilhafter Weise die Sicherheit derart erhöht, daß eine Entschlüsselung durch unberechtigte Personen nahezu ausgeschlossen ist, da unter Verwendung eines Betriebsmodus' (CBC, CFB, OFB) und bei gleichem Schlüssel durch die Rückkopplung von (Zwischen-)Ergebnissen eine größere "Verwürfelung" der Daten als beim einfacheren ECB-Betriebsmodus erreicht wird.

Durch die mehrstufige Rechenpipeline werden Hardware-Ressourcen zur gleichzeitigen Bearbeitung einer entsprechend der Anzahl der Stufen voneinander unabhängigen Datenströmen bereitgestellt, die als physikalische Kanäle bezeichnet werden sollen.

Durch die Unabhängigkeit der physikalischen Kanäle lassen sich unabhängige, logische Kanäle einrichten und auf die physikalischen Kanäle abbilden, wobei die Anzahl der logischen Kanäle die Anzahl der physikalischen Kanäle übersteigen kann und die Nutzung der physikalischen Kanäle durch die logischen Kanäle im Zeitmultiplexbetrieb erfolgt. Ein solcher logischer Kanal ist charakterisiert durch einen Datenstrom zur Ver-/Entschlüsselung der jeweiligen (Fortsetzung auf der ursprünglichen Beschreibungsseite 3)Betriebsart sowie dem dazugehörigen Schlüssel und gebenenfalls einem Start-/Initialisierungswert. Zur besseren Unterscheidung werden im folgenden die logischen Kanäle auch als Kontexte bezeichnet.

Vorteilhafte Ausgestaltungen der Erfindung ergeben sich aus den Unteransprüchen.

Mit der erfindungsgemäßen Vorrichtung ist die Realisierung von ISO-10116 Betriebsarten bei Verschlüsselungsverfahren möglich, wobei die Rechenpipeline zur Durchführung der Ver-/Entschlüsselungsoperation in mehreren Runden betrieben wird. Als Verschlüsselungsverfahren lassen sich beispielhaft das IDEA-(International Data Encryption Algorithm) oder das DES-(Data Encryption Standard)Verfahren nennen.

Ein weiterer Vorteil der erfindungsgemäßen Vorrichtung ist darin zu sehen, daß keinerlei Einschränkungen für die beim Kontextwechsel auftretenden Kombinationen von vorhergehender Betriebsart (bei einem auszulagernden Kontext) und nachfolgender Betriebsart (beim neu zu initialisierenden Kontext) zu beachten sind.

Durch entsprechende Ausgestaltung der Vorrichtung auf konfliktfreie Datenübertragungswege bei gleichzeitigem Abschluß des Betriebes in einem Kontext (Weiterleitung und Sicherung der Ergebnisse beziehungsweise des Startwerts zum Wiederaufsetzen des Ver-/Entschlüsselungsverfahrens im nun beendeten Kontext) und der Aufnahme des Betriebes im neuen Kontext wird keine zusätzliche Verzögerung bei einem Kontextwechsel benötigt.

Die ohne zusätzliche Verzögerungen durchgeführten Kontextwechsel werden ermöglicht durch einen den Betrieb überlappenden Subschlüssel- oder Schlüsselwechsel. Dabei erfolgt das Laden der für den neuen Kontext benötigten Subschlüssel beziehungsweise Schlüssel in den den Ver-/Entschlüsselungselementen zugeordneten Speicherelementen derart, daß vom derzeit noch aktiven Kontext bereits abgearbeitete Schlüssel in den Speicherelementen überschrieben werden.

Sämtliche Datenpfade außerhalb des Rechenwerks sind im normalen Betrieb (Beginn/Fortführung/Ende einer weiteren Ver/Entschlüsselung in einem gerade aktiven Kontext ohne unmittelbar vorherigem/nachfolgendem Kontextwechsel) für die Dauer einer Taktperiode einem Kanal zugeordnet. Bei einem Kontextwechsel (alter logischer Kanal wird beendet, dessen neu berechneter Startwert wird außerhalb der vorliegenden Vorrichtung für eine Wiederaufnahme des Kontextes abgelegt; der neue logische Kanal wird initialisiert und beginnt im gleichen Takt die Abarbeitung) hingegen sind gleichzeitig der alte, auszulagernde Kontext (im Ausgangsbereich der Vorrichtung) und der neue, einzulagernde Kontext (im Eingangsbereich der Vorrichtung) aktiv.

Durch die Mitführung von Data-Valid-Informationen zur Charakterisierung der in einer Pipelinestufe befindlichen Daten wird ein fortlaufender Betrieb auch in dem Fall gewährleistet, daß aufgrund unterschiedlicher Datenraten in den verschiedenen aktiven Kontexten zweitweise für einen oder mehrere Kanäle keine gültigen Eingangsdaten bereitstehen. Die Rechenpipeline wird in diesem Fall nicht angehalten, sondern läuft unter Markierung des/der Kanäle ohne gültige Eingangsdaten weiter. Die Mitführung von Valid-Data-Bits und der Betriebsart in jedem Kanal der Pipeline (beziehungsweise in separater Lookup-Table) ist erforderlich zur bedingten Speicherung von Zwischen-Ergebnissen in den vorhandenen Registerelementen beziehungsweise in einem am Datenausgang angeschlossenen Datenpuffer sowie zur Festlegung der vom Kanal verwendeten Datenpfade.

Die Erfindung wird nun anhand eines Ausführungsbeispiels mit Bezug auf die Zeichnung näher erläutert. Dabei zeigt die einzige Figur ein Blockdiagramm einer Vorrichtung zur Durchführung eines Blockchiffrierverfahrens.

Eine in der Figur dargestellte Vorrichtung 1 zur Durchführung eines Blockchiffrierverfahrens umfaßt ein Rechenwerk 3, das das Herz der Ver-/Entschlüsselung darstellt. Das Rechenwerk 3 selbst besteht aus einer Anzahl von p Rechenwerkeinheiten 5, die jeweils zur Ausführung einer Ver-/Entschlüsselungs(-teil-)funktion ausgebildet sind. Auf die interne Struktur dieser Rechenwerkeinheiten 5 soll an dieser Stelle jedoch nicht eingegangen werden.

Die in der Figur gezeigten, unabhängig voneinander arbeitenden Rechenwerkeinheiten 5 bilden eine Rechenwerkpipeline, bei der die Ver-/Entschlüsselung in mehreren Schritten und falls erforderlich in mehreren Durchläufen erfolgt.

Der zu ver-/entschlüsselnde Datenstrom wird einem Dateneingang, 7 der Vorrichtung 1 zugeführt. Dieser Datenstrom wird durch eine Folge von Datenwörtern der Wortbreite j≤n Bits gebildet, die im folgenden auch als Datensignale bezeichnet werden. Bei den Ver-/Entschlüsselungen werden jeweils nur die j niederwertigsten Bits des Eingangsdatenstroms verarbeitet. Die höchstwertigen (n-j) Bits werden beim Ver-/Entschlüsselungsprozeß nicht berücksichtigt und können beispielsweise der Aufnahme unverschlüsselt zu übertragenden Steuerinformationen dienen.

Die am Dateneingang liegenden Datensignale werden einem Eingang eines Multiplexers 9 zugeführt. Das Ausgangssignal der Wortbreite n des 3:1 Multiplexers 9 wird einem Exklusiv-Oder-Gatter 11 zugeführt, dessen Ausgang mit der ersten Stufe 5 des Rechenwerks 3 verbunden ist. Das zur Verknüpfung im Exklusiv-Oder-Gatter 11 notwendige zweite Eingangssignal liefert ein 2:1 Multiplexer 13 der Wortbreite n. Das Exklusiv-Oder-Gatter verknüpft die beiden n Bits umfassenden Eingangssignale bitweise zu einem Ausgangssignal gleicher Wertbreite.

Dieser Multiplexer 13 wählt eines aus zwei anliegenden Eingangssignalen aus, wobei eines der beiden Eingangssignale einen konstanten Wert, im vorliegenden Ausführungsbeispiel den Bitvektor 0 mit einer Wortbreite n Bits besitzt. Das andere Eingangssignal liefert entweder ein erstes Register 15 oder ein zweites Register 17.

Bei dem ersten Register 15 handelt es sich um einen Speicher, der eine Anzahl von p Datenworte der Wortbreite n Bits abspeichern kann. Zur Erhöhung der Flexibilität ist es auch denkbar, daß das erste Register 15 unterschiedliche Wortbreiten am Eingang (beispielsweise n, $n/2$, ... Bits) und am Ausgang (n Bits) aufweist, wobei im Register die Umsetzung der Eingangswortbreite auf die Ausgangswortbreite n Bits erfolgt. Das erste Register 15 selbst dient zur Aufnahme von Start-/Initialisierungswert bei den Betriebsarten CBC (Cipher Block Chaining), CFB (Cipher Feed-Back) und OFB (Output Feed-Back). Eine genaue Erläuterung dieser Betriebsarten befindet sich in ISO/IEC 10116, 1991 (E), "Information Processing-Modes of Operation for n-Bit Block Cipher Algorithm", International Organisation for Standardization, so daß an dieser Stelle nicht weiter auf diese Verfahren eingegangen werden muß.

Das zweite Register 17 ist ebenfalls als Speicher ausgebildet, wobei eine Anzahl von p Datenworten mit einer Wortbreite von n Bits gespeichert werden kann. Im Gegensatz zu dem ersten Register 15 besitzt das zweite Register 17 zwei Ausgänge 19.1, 19.2, wobei der Ausgang 19.1 mit dem Eingang des Multiplexers 13 verbunden ist. Das zweite Register 17 dient zur Aufnahme von Dateneingangswerten beziehungsweise Rückkopplungswerten bei den zu dem ersten Register 15 genannten Betriebsarten.

An dem oberen Ausgang 19.1 läßt sich entweder der adressierte gespeicherte Wert oder der am Eingang des zweiten Registers 17 anliegende Eingangswert abgreifen. Dagegen läßt sich am Eingang 19.2 lediglich der adressierte gespeicherte Wert auslesen. Das zweite Register 17 ist desweiteren so ausgelegt, daß gleichzeitig mit dem Auslesen eines Datensignals ein nachfolgend zu speicherndes Datensignal in das Register übernehmbar ist.

Obgleich in der Figur der Ausgang des ersten Registers 15 und der Ausgang 19.1 des zweiten Registers 17 zusammengeführt sind, werden die beiden gespeicherten Werte der Register 15, 17 wahlweise an den Eingang des Multiplexers 13 übertragen. Dazu sind die beiden Register 15, 17 entweder mit einem sogenannten Tri-State-Treiber versehen, bei dem der Ausgang auf einen hochohmigen Wert geschaltet werden kann. Alternativ hierzu läßt sich jedoch auch durch Verwendung eines in der Figur nicht dargestellten 2:1 Multiplexers eine entsprechende Signalauswahl erzielen.

Dem ersten Register 15 wird ein Start-/Initialisierungssignal über einen Eingang 21 zugeführt. Dem zweiten Register 17 wird ein Eingangssignal zugeführt, das von einem 3:1 Multiplexer 23 aus drei Eingangssignalen ausgewählt wird. Eines der Eingangssignale ist das Ausgangssignal des Multiplexers 9, ein weiteres Eingangssignal ist das Ausgangssignal des ersten Registers 15 beziehungsweise das am Ausgang 19.1 anliegende Ausgangssignal des zweiten Registers 17. Bei dem dritten Eingangssignal des Multiplexers 23, der im übrigen ebenfalls Datensignale der Wortbreite n verarbeitet, handelt es sich um ein rückgekoppeltes Signal R, das nachfolgend noch näher erläutert wird.

Dieses rückgekoppelte Signal R liegt im übrigen auch an einem Eingang des Multiplexers 9 an. Bei dem dritten und damit letzten Eingangssignal des Multiplexers 9 handelt es sich um einen konstanten Bitvektor, vorzugsweise mit dem Wert 0.

Das rückgekoppelte Signal R wird ebenfalls einem weiteren 2:1 Multiplexer 25 der Wortbreite n als ein Eingangssignal geführt. Das zweite Eingangssignal des Multiplexers 25 bildet das am Ausgang 19.2 des zweiten Registers 17 anliegende Signal. Das Ausgangssignal des Multiplexers 25 wird dem Eingang eines dritten Registers 27 zugeführt. Das dritte Register 27 ist ebenfalls als Speicher ausgebildet, der eine Anzahl von p Datenworten der Wortbreite n Bit abspeichern kann, wobei wie das erste Register 15 unterschiedliche Wortbreiten am Eingang (n Bits) und am Ausgang (beispielsweise n, $\frac{n}{2}$, ... Bits) vorliegen können.

Das dritte Register 27 dient zur Aufnahme des berechneten Initialisierungswertes für Folge-Ver/Entschlüsselungen für jene Betriebsarten, die im Zusammenhang mit dem ersten Register 15 erwähnt wurden. Der Initialisierungswert beziehungsweise das Initialisierungssignal wird in dem dritten Register 27 gepuffert und bei einem Kontextwechsel hieraus ausgelesen und über den Ausgang 28 der Vorrichtung 1 einem externen Puffer zugeführt. Sobald der beendete Kontext wieder fortgesetzt wird, wird der gepufferte Initialisierungswert über den Eingang 21 als Startwert dem ersten Register 15 zur Verfügung gestellt. Dies ist durch eine gestrichelte Linie L in der Figur veranschaulicht.

In der Figur ist weiterhin ein 2:1 Multiplexer 29 zu erkennen, dem einerseits das am Ausgang 19.1 des zweiten Registers 17 anliegende Datensignal und desweiteren das am Dateneingang 7 anliegende Datensignal zugeführt ist. Aus diesen beiden Eingangssignalen wählt der Multiplexer 29 ein Datensignal aus und führt dieses einem temporären Register 31 als Eingangssignal zu. Dieses Register ist als Speicher zur Speicherung einer Anzahl von p Datensignalen der Wortbreite n Bit ausgebildet und dient der Aufnahme eines Dateneingangs- oder Initialisierungssignals für die Dauer einer Ver-/Entschlüsselung. Das gespeicherte Datensignal des temporären Registers 31 wird als Eingangssignal einem 2:1 Multiplexer 33 zugeführt, dessen zweiter Eingang mit einem konstanten Bitvektor -im vorliegenden Ausführungsbeispiel mit dem Wert 0- beaufschlagt ist. Das Ausgangssignal des Multiplexers 33 wird einem Exklusiv-Oder-Gatter 35 zur Verknüpfung mit einem weiteren Eingangssignal zugeführt, das von einer Auswahlvorrichtung 37 bereitgestellt wird. Das Eingangssignal dieser Auswahlvorrichtung 37 stellt das Ausgangssignal der letzten Stufe 5.p des Rechenwerks 3 dar.

Die Auswahlvorrichtung 37 dient dazu, aus dem n Bits umfassenden Eingangswert die j höchstwertigen Bitstellen herauszugreifen und am Ausgang in die j niederwertigsten Bitstellen einzusetzen. Die übrigen (n-j) höchstwertigen Stellen des Ausgangswertes werden mit dem Wert 0 gefüllt. Somit realisiert die Auswahlvorrichtung 37 eine Verschiebung des Eingangswertes um (n-j) Stellen.

Die von der Auswahlvorrichtung 37 ausgeführte Funktion SV läßt sich wie folgt darstellen:

$$out[n-1:0]=SV(j,in[n-1:0])=\{zero[n-j-1:0],in[n-1:n-j]\}.$$

Hierbei wird für Datenleitungen beziehungsweise Datensignale der Breiten i die Notation [i-1:0] verwendet, wobei Bit [i-1] das höchstwertige Bit (MSB) und Bit [0] das niederwertigste bit (LSB) bezeichnen. Das Zeichen {} bezeichnet eine Konkatenation von Datensignalen/Datenleitungen zu einem Bus.

Das Ausgangsignal des Exklusiv-Oder-Gatters 35 wird einer Maskierungsvorrichtung 39 zugeführt, die das Eingangsdatensignal folgender Funktion MASK unterzieht:

$$out[n-1:0]=MASK(j,in[n-1:0])=\{zero[n-j-1:0],in[j-1:0]\}$$

oder bei Bedarf

$$out[n-1.0]=MASK(j,in[n-1:0])=\{in[n-1:0]\}.$$

Das heißt in Worten, daß die höchstwertigen (n-j) Bits auf 0 maskiert werden durch Konkatenation der j niederwertigsten Bits des Eingangswertes mit dem Ergebnis der Funktion zero[n-j-1:0], die einen (n-j)-stelligen 0-Vektor liefert. Im vorliegenden Ausführungsbeispiel läßt sich diese Maskierung abschalten, so daß auch die höchstwertigen (n-j) Bits, die, wie bei der Beschreibung des Dateneingangs 7 bereits angegeben, der Aufnahme beispielsweise von unverschlüsselt zu übertragenden Steuerinformationen dienen können, unverändert zum Ausgang der Maskierungsvorrichtung 39 übertragen werden. Das Ausgangsignal der Maskierungsvorrichtung 39 bildet dann das an einem Datenausgang 41 abgreifbare Datenausgangssignal der Vorrichtung 1.

Zur Rückkopplung eines Ausgangssignals des Rechenwerks 3 ist ein 4:1 Multiplexer 43 vorgesehen, dem als Eingangssignale die Ausgangssignale des Rechenwerks 3, der Auswahlvorrichtung 37, des Exklusiv-Oder-Gatters 35 und des Multiplexers 33 zugeführt sind. Aus diesen vier Eingangssignalen der Wortbreite n wählt der Multiplexer 43 ein Datensignal aus und führt es einer Verschiebe- und Konkatenationsvorrichtung 45 als zweites Eingangssignal in2 zu. Das erste Eingangssignal in1 bildet das am Ausgang 19.2 anliegende Datensignal des zweiten Registers 17. Diese beiden Eingangssignale in1, in2 werden nun mittels der Funktion VK wie folgt miteinander verknüpft:

$$out[n-1:0]=VK(j,k,in1[n-1:0],in2[n-1:0])=$$

$$\{in1[n-k-1:0],one[k-j-1:0],in2[j-1:0]\},$$

das heißt, daß eine Konkatenation der (n-k) niederwertigsten Bits des Eingangssignals in1, von (k-j) 1-Bits aus der Funktion one(k-j-1:0]) und der j niederwertigsten Bits von dem Eingangssignal in2 durchgeführt wird. Das Ausgangssignal der Verschiebe- und Konkatenationsvorrichtung 45 bildet dann das bereits beschriebene rückgekoppelte Signal R.

Die Figur läßt noch erkennen, daß dem Rechenwerk 3 eine Speichervorrichtung 47 zugeordnet ist, wobei diejenigen Rechenwerkeinheiten 5 ... 5p mit der Speichervorrichtung 47 verbunden sind, die zur Durchführung ihrer Ver-/Entschlüsselungs(-teil-)operation Schlüssel beziehungsweise Subschlüssel benötigen. Die Speichervorrichtung 47 selbst dient der Bereitstellung von zur Ver-/Entschlüsselung benötigten Schlüsseln beziehungsweise Subschlüsseln, wobei sie bei einem wahlfreien Betrieb der p Pipelinestufen Schlüssel oder Subschlüssel für mindestens p Kontexte aufnehmen muß. Abhängig von der Betriebsart im jeweiligen Kontext sind entweder die im ISO-10116-Standard genannten E (Encryption) oder D (Decryption) Subschlüssel beziehungsweise Schlüssel in der Speichervorrichtung 47 abzulegen. Zum gleichzeitigen Auslesen (für die Ver-/Entschlüsselung) und Schreiben (für die Initialisierung eines neuen Kontextes über den Eingang 48) sind zwei unabhängig voneinander betreibbare Speicherschnittstellen vorgesehen. Vorzugsweise handelt es sich bei der Speichervorrichtung 47 um ein Dual-Port-RAM (Random Access Memory, wiederbeschreibarer Speicher mit wahlfreiem Zugriff).

Die Figur läßt nicht erkennen, daß zur Vermeidung von Stillstandzeiten des Rechenwerks 3 ein sogenanntes Data-Valid-Flag für jede der p Pipelinestufen 5 vorgesehen ist, welches angibt, ob in der entsprechen Pipelinestufe gültige Daten vorhanden sind und bearbeitet werden. Zum Ende einer Ver/Entschlüsselung wird eine Weiterleitung über den Datenausgang 41 beziehungsweise Speicherung des Ergebnisses in den Registern 17 und/oder 27 nur dann durchgeführt, wenn die Daten am Ausgang der letzten Pipelinestufe 5.p gültig waren. Die Data-Valid-Flags begleiten die zugehörigen Daten auf deren Weg durch das Rechenwerk 3.

Falls zu einem Zeitpunkt, zu dem für einen Kontext Eingangsdaten erwartet werden, keine Eingangsdaten vorliegen, wird das Rechenwerk nicht angehalten, sondern nur das zugehörige Data-Valid-Flag auf "Data-Invalid" gesetzt. Daten für diesen Kontext können dann erst wieder nach einem vollständigen Ver-/Entschlüsselungsdurchgang (nach r•p Takten, wobei r die Zahl der durch den Verschlüsselungsalgorithmus benötigten Runden (hier: Durchläufe eines zu bearbeitenden Datums durch die Rechenwerkpipeline 3) und p die Anzahl der Pipelinestufen darstellen) entgegengenommen werden.

In der Figur sind der Übersicht wegen die Adreßleitungen zu den Registern 15, 17, 27 und 31 nicht dargestellt.

Sowohl die Lesezugriffe auf das erste Register 15, das zweite Register 17 und das temporäre Register 31 als auch die Schreibzugriffe auf das temporäre Register 31, das zweite Register 17 und das dritte Register 27 werden gemeinsam adressiert. Die Adresse gibt dabei die Nummer $i \in \{1, 2 \ldots p\}$ des Kontextes an, dem die gesamte Struktur außerhalb des Rechenwerks 3 während der betrachteten Periode zugeordnet ist.

Desweiteren sind zur Vereinfachung in der Figur lediglich einzelne Leitungen dargestellt. Sie stehen jedoch stellvertretend für Datenbusleitungen, die sämtlich für eine Übertragung von Datenworten der Wortbreite n Bits ausgelegt sind. Einzige Ausnahmen hiervon können die Datenbusse vom Eingang 21 zum ersten Register 15, vom Ausgang des dritten Registers 27 zum Ausgang 28 sowie die Datenbusse für die Subschlüssel beziehungsweise Schlüssel zwischen dem Eingang 48 und der Speichervorrichtung 47 oder zwischen dieser und der Rechenwerkpipeline 3 bilden. Im übrigen wurden auch die Taktleitungen der Übersicht wegen nicht dargestellt, die zur getakteten Übertragung der einzelnen Datenworte über die Busleitungen und die entsprechende Verknüpfung in den einzelnen Verknüpfungselementen notwendig sind.

Im folgenden soll nun auf die Funktion der Vorrichtung 1 in den einzelnen Betriebsarten eingegangen werden.

Während eines Taktes steht die gesamte Struktur beziehungsweise Architektur außerhalb des Rechenwerks 3 einem Kontext, das heißt einem virtuellen oder logischen Kanal, zur Verfügung. Analog hierzu ist im Rechenwerk 3 jeder Pipelinestufe 5 ein eigener Kontext (virtueller Kanal) zugeordnet.

Wird ein Kontextwechsel vorgenommen, das heißt die Abarbeitung eines Kontextes nach vollständiger Berechnung des Ergebnisses (ver-/entschlüsseltes Datum) beendet, dessen Ergebnisse zum Wiederaufsetzen des Kontextes gesichert und ein neuer Kontext gestartet, so ist der Ausgangsbereich der Architektur dem beendeten Kontext und der Eingangsbereich der Architektur dem gestarteten Kontext zugeordnet. Als Ausgangsbereich werden die in der Figur mit den Bezugszeichen 31, 33, 37, 39, 43, 45, 25, 35, und 27 gekennzeichneten Komponenten bezeichnet. Als Eingangsbereich werden die mit den Bezugszeichen 9, 11, 13, 29, 15, 17 und 31 sowie die zu deren Verbindung benötigten Busse beziehungsweise Datenleitungen bezeichnet. Zur Verdeutlichung ist in der Figur jeder der Komponenten im Ausgangsbereich ein A und im Eingangsbereich ein E zugeordnet.

Die zur Abarbeitung der Blockchiffrierung nach der bereits genannten ISO-10116 benötigten Informationen zur Konfiguration der Architektur sind, sortiert nach Betriebsarten, in der Tabelle am Ende der Beschreibung angegeben. Die Eintragungen (I) und (F) in der ersten Spalte der Tabelle kennzeichnen die Ver-/Entschlüsselung des ersten Datenblocks nach einem Kontextwechsel (I), beziehungsweise die darauffolgenden Ver-/Entschlüsselungen (F) für weitere Datenblöcke im gleichen Kontext. Zu beachten ist, daß bei einem Kontextwechsel in einem Kanal das Ende der letzten Runde einer Ver-/Entschlüsselung zeitgleich mit dem Beginn der ersten Runde (I) für den neuen Kontext ausgeführt wird. Die erste Runde (I) bei einem neu initialisierten Kontext wird erst bei verfügbaren Daten im Eingangspuffer gestattet. Bei Folgeoperationen im gleichen Kontext wird die Konfiguration "Beginn 1. Runde (F)" ausgewählt, die wiederum zeitgleich das Ende der letzten Runde der vorigen Operation und den Start der Nachfolgeoperation durchführt.

Als Beginn einer Runde wird die Bereitstellung aller Eingangswerte an den Eingängen des Rechenwerks 3, der Register 15, 17, 27 (soweit bei der jeweiligen Betriebsart erforderlich) beziehungsweise des temporären Registers 31 verstanden. Als Ende der letzten Runde für einen Ver-/Entschlüsselungsdurchlauf gilt entsprechend die Weiterleitung der Ergebnisse von den Ausgängen des Rechenwerks 3, den Registern 15, 17, 27 beziehungsweise dem temporären Register 31.

Die Bezeichnungen der Spalten geben die Bezugszeichen der entsprechenden Komponenten in der Figur an, die Spalteninhalte den durchgeschalteten Eingang bei Multiplexern, wobei die Eingänge mit den Buchstaben A, B, C oder D bezeichnet sind, beziehungsweise das numerische Funktionsargument (bei den Verschiebe- beziehungsweise Maskierungsvorrichtungen 37, 39 oder 45) angeben. Die Elemente, die den nicht besetzten Feldern zugeordnet sind, können für die Sicherung des vorherigen beziehungsweise die Bereitstellung des nachfolgenden Datensatzes (gegebenenfalls in einem anderen Ver-/Entschlüsselungsmodus) geeignet gesetzt werden.

Für die Schreibfunktionen des zweiten Registers 17 beziehungsweise des dritten Registers 27 gelten die folgenden Abkürzungen:

WVO: write on valid pipeline output data; das heißt, eine Datenübernahme in das Register erfolgt, falls gültige Daten am Ausgang des Rechenwerks 3 anliegen;

WVI: write on valid input buffer data; das heißt, eine Datenübernahme in das Register erfolgt, falls am Dateneingang 7 gültige Eingangsdaten bereitgestellt werden;

- : keine Datenübernahme.

Für das zweite Register 17 gilt darüber hinaus:

B: bypass; direkte kombinatorische Durchschaltung des Eingangs des zweiten Registers auf den Ausgang 19.1, gegebenenfalls mit zusätzlicher Abspeicherung des Eingangswerts im zweiten Register, wenn gültige Eingangspufferdaten und Ausgangsdaten aus dem Recherwerk 3 vorhanden sind.

Für das dritte Register 27 gilt:

W_II: write register II output; das heißt, das Ausgangssignal des zweiten Registers 17 wird gespeichert.

In das temporäre Register 31 werden in den betreffenden Betriebsarten Werte nur übernommen, wenn gültige Daten am Dateneingang anliegen.

Falls bei einem Kontextwechsel Schreibzugriffskonflikte auf dem zweiten Register 17 auftreten (das heißt sowohl für die alten als auch für den neuen Kontext, müssten laut der Tabelle Schreibzugriffe auf das zweite Register 17 erfolgen), wird nur der Schreibzugriff des neuen Kontextes ausgeführt. Der vom alten Kontext in das Register 17 zu speichernde Wert könnte nicht mehr ausgewertet werden.

Das erste Register 15 beziehungsweise das dritte Register 27 werden unabhängig vom Stand der Ver/Entschlüsselungsabarbeitung beschrieben (erstes Register) beziehungsweise gelesen (drittes Register) und sind daher in der Tabelle nicht aufgeführt. Einzige Voraussetzung für deren Schreib(erstes Register) beziehungsweise Leseoperationen (drittes Register) ist die rechtzeitige Bereitstellung beziehungsweise das rechtzeitige Auslesen der Daten, bevor eine durch die auszuführende Ver-/oder Entschlüsselung hervorgerufene Leseanforderung (beim ersten Register) beziehungsweise Schreibanforderung (beim dritten Register) vorliegt.

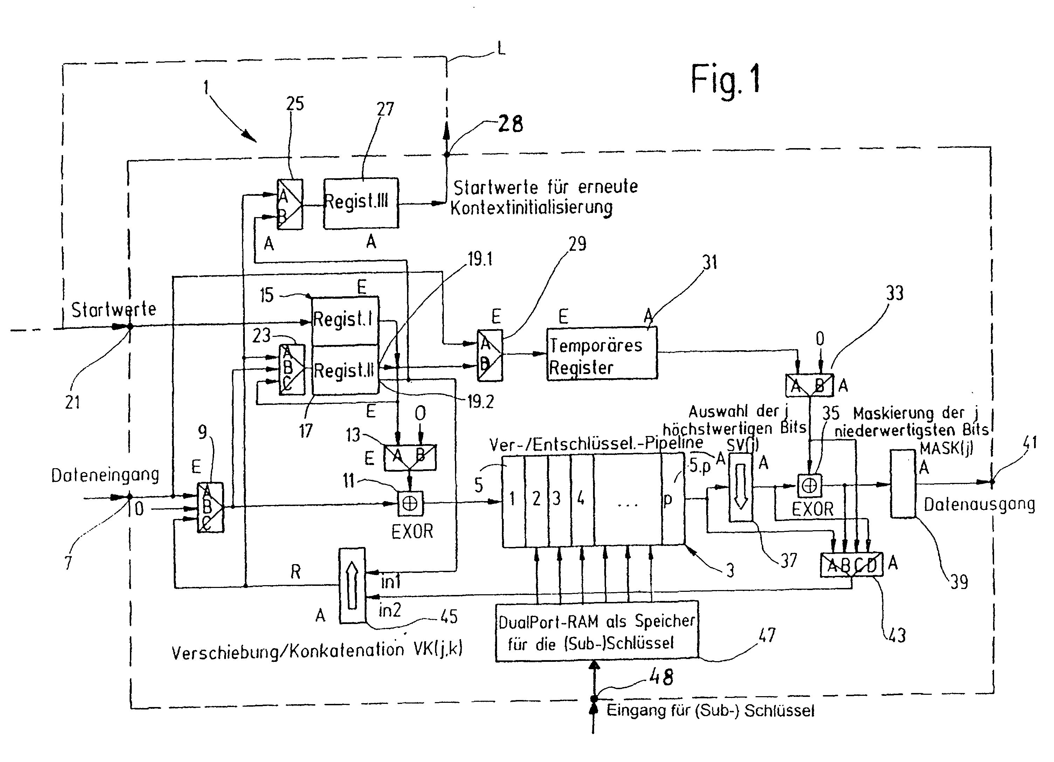

Mit Ausnahme der in der Praxis häufig verwendeten und nicht in den ISO-Standard erfaßten Betriebsart OFB_N_ISO-m Enc./Dec. (OFB-Betriebsart gemäß B. Schneier: "Applied Crytography", 2nd Ed. 1995, John Wiley & Sons, Inc.) entsprechen alle in der Tabelle gemäß Figur 2 genannten übrigen Betriebsarten den im ISO-10116-Standard geführten Randbedingungen. Für die Wortbreiten n und die Funktionsargumente k beziehungsweise j sind in der Praxis n=64 und k=j=64,8,7,1 häufig verwendete Werte.

Zur Verdeutlichung der in der Tabelle verwendeten Nomenklatur soll nochmals anhand von zwei Beispielen dessen Bedeutung erläutert werden.

Als erste Betriebsart ist in der Tabelle der ECB-Enc./Dec. Modus angegeben. Hierbei wird der Eingang A des Multiplexers 9, das heißt das Dateneingangssignal am Dateneingang 7 weitergeleitet und am Exklusiv-Oder-Gatter 11 mit dem am Eingang B anliegenden Signal des Multiplexers 13 verknüpft. Da dieses Signal am Multiplexer 13 den konstanten Wert 0 aufweist, wird das Ausgangssignal des Multiplexers 9, das heißt das Dateneingangssignal am Eingang 7 der ersten Stufe des Rechenwerks 3 zugeführt. Sobald der erste Wert das Rechenwerk 3 durchlaufen hat und nicht wieder zurückgeführt werden soll, wird das Eingangssignal am Eingang B des Multiplexers 33 ausgewählt. Da es sich hierbei um einen konstanten Wert 0 handelt, wird das am Exklusiv-Oder-Gatter 35 anliegende Signal unverändert weitergeführt. Die beiden Buchstaben n in den Spalten 37 und 39 besagen, daß keine Veränderung, das heißt Auswahl oder Maskierung, in den beiden Vorrichtungen 37 und 39 stattfindet.

Der nächste in der Tabelle angegebene Modus ist der CBC-Enc. Modus. Hierbei werden in der ersten Initialisierungsrunde die Signale an den Eingängen A der Multiplexer 9 und 13 zum Exklusiv-Oder-Gatter 11 weitergeführt. Dort findet dann eine entsprechende Verknüpfung des in dem ersten Register 15 abgespeicherten Start- beziehungsweise Initialisierungswertes und dem Dateneingangssignal statt, wobei das verknüpfte Signal dem Rechenwerk 3 zugeführt wird. Anschließend werden zur Ver-/Entschlüssung die Signale an den Eingängen B der beiden Multiplexer 33 und 43 und die Eingangssignale an den Eingängen A der Multiplexer 23 und 25 weitergeleitet. Eine Veränderung des Datensignals durch die Vorrichtungen 37, 39 oder 45 findet nicht statt. Desweiteren wird das rückgeführte Signal R in das zweite Register 17 sowie in das dritte Register 27 eingeschrieben. In der letzten Runde dieser Betriebsart wird das rückgeführte Signal R in das dritte Register 27 als Startwert für eine erneute Kontextinitialisierung eingeschrieben. Eine Übernahme dieses Datensignals in das zweite Register 17 erfolgt jedoch nicht.

Entsprechend sind auch die weiter in der Tabelle angegebenen Betriebsarten zu verstehen.

Es zeigt sich also, daß sich durch die Unabhängigkeit der Pipelinestufen eine Vorrichtung realisieren läßt, die verschiedene Datenströme in verschiedenen Ver-/Entschlüsselungsbetriebsarten abarbeiten kann.

Tabelle:

| | Eingangsbereich | | | Ausgangsbereich | | | | | | | Datenübernahme in Register | | |
|---|---|---|---|---|---|---|---|---|---|---|---|---|---|
| Betriebsart | 9 | 13 | 29 | 33 | 43 | 37 | 39 | 45 | 23 | 25 | 17 Reg. II | 31 Tmp. Reg. | 27 Reg. III |
| ECB-Enc./Dec. | | | | | | | | | | | | | |
| Beginn 1. Runde | A | B | | | | | | | | | - | - | - |
| Ende letzte Runde | | | | B | | n | n | | | | - | - | - |
| CBC-Enc. (bzw. CBC-MAC) | | | | | | | | | | | | | |
| Beginn 1. Runde (I) CBC-Mode oder CBC-MAC-Mode bei der Bearbeitung nachfolgender Daten eines Kontextes | A | A | | | | | | | | | - | - | - |
| Beginn 1. Runde (I) im CBC-MAC-Mode bei der Bearbeitung des ersten Datums in einem Kontext | A | B | | | | | | | | | - | - | - |
| Beginn 1. Runde (F) | A | A | | B | B | n | n | n | A | A | WVO / B | - | WVO |
| Ende letzte Runde | | | | B | B | n | n | n | | A | - | - | WVO |
| CBC-Dec. | | | | | | | | | | | | | |
| Beginn 1. Runde (I) | A | B | B | | | | | | B | | WVI | WVI | - |
| Beginn 1. Runde (F) | A | B | B | A | | n | n | | B | B | WVI | WVI | W II |
| Ende letzte Runde | | | | A | | n | n | | | B | - | - | W_II |
| CFB-j,k-Enc. | | | | | | | | | | | | | |
| Beginn 1. Runde (I) | B | A | A | | | | | | C | | WVI | WVI | - |
| Beginn 1. Runde (F) | B | A | A | A | B | j | j | j,k | A | A | WVO | WVI | WVO |
| Ende letzte Runde | | | | A | B | j | j | j,k | | A | - | - | WVO |
| CFB-j,k-Dec. | | | | | | | | | | | | | |
| Beginn 1. Runde (I) | B | A | A | | | | | | C | | WVO | WVI | - |
| Beginn 1. Runde (F) | B | A | A | A | C | j | j | j,k | A | A | WVO/B | WVI | WVO |
| Ende letzte Runde | | | | A | C | j | j | j,k | | A | - | - | WVO |
| OFB-j-Enc./Dec. | | | | | | | | | | | | | |

Tabelle: (fortgesetzt)

| Betriebsart | Eingangsbereich | | | Ausgangsbereich | | | | | | | Datenübernahme in Register | | |
|---|---|---|---|---|---|---|---|---|---|---|---|---|---|
| | 9 | 13 | 29 | 33 | 43 | 37 | 39 | 45 | 23 | 25 | 17 Reg. II | 31 Tmp. Reg. | 27 Reg. III |
| Beginn 1. Runde (I) | B | A | A | | | | | | | | - | WVI | |
| Beginn 1. Runde (F) | B | A | A | A | A | j | j | n | A | A | WVO / B | WVI | WVO |
| Ende letzte Runde | | | | A | A | j | j | n | | A | - | - | WVO |
| OFB_N_ISO-j-Enc./Dec. | | | | | | | | | | | | | |
| Beginn 1. Runde (I) | B | A | A | | | | | | | | - | WVI | - |
| Beginn 1. Runde (F) | B | A | A | A | D | j | j | j,0 | A | A | WVO/B | WVI | WVO |
| Ende letzte Runde | | | | A | D | j | j | j,0 | | A | - | - | WVO |
| Zwischenrunden Ende 1. - Beginn letzte Runde | C | B | | | A | | | n | | | - | - | - |

EP 0 986 872 B1

**Patentansprüche**

1. Vorrichtung zur Durchführung eines Blockchiffrierverfahrens mit einem Ver-/Entschlüsselungs-Rechenwerk, dem der zu chiffrierende Datenstrom der Wortbreite n zugeführt ist, wobei das Rechenwerk mehrere Ver-/Entschlüsselelemente umfaßt, die jeweils eine Stufe einer Rechenpipeline bilden, wobei die Stufen mit unterschiedlichen Schlüsseln arbeiten, **dadurch gekennzeichnet, daß** das Rechenwerk (3) mit unterschiedlichen Betriebsarten derart arbeitet, daß dem Rechenwerk (3) ein erstes Exklusiv-Oder-Gatter (11) vorgeschaltet ist, das eine bitweise Verknüpfung zweier Eingangsworte der Wortbreite n durchführt, wobei ein Eingang des ersten Exklusiv-Oder-Gatters (11) mit einer ersten Multiplexer-Vorrichtung (9) und der zweite Eingang mit einer zweiten Multiplexer-Vorrichtung (13) verbunden ist, wobei der ersten Multiplexer-Vorrichtung (9) der Eingangsdatenstrom zugeführt ist, und wobei ein Eingang der zweiten Multiplexer-Vorrichtung (13) mit einem Ausgang einer Zwischenspeichervorrichtung (15,17) verbunden ist, die zur Speicherung mehrerer Start- und Initialisierungswerte für das Chiffrierverfahren sowie von Dateneingangs- und Rückkopplungswerten ausgebildet ist.

2. Vorrichtung nach Anspruch 1, **dadurch gekennzeichnet, daß** jedem Ver-/Entschlüsselungselement (5), welches zur Durchführung seiner Ver-/Entschlüsselungs(-teil-)operation(en) Schlüssel beziehungsweise Subschlüssel benötigt, ein Speicherelement (47) zugeordnet ist, das zum Speichern eines Schlüssels beziehungsweise eines Subschlüssels geeignet ist.

3. Vorrichtung nach Anspruch 2, **dadurch gekennzeichnet, daß** das Speicherelement (47) ein Dual-Port-Speicher ist.

4. Vorrichtung nach Anspruch 1, **dadurch gekennzeichnet, daß** der Ausgang des Rechenwerks (3) mit einer Auswertevorrichtung (33,35/37,43,39) verbunden ist, die den ver-/entschlüsselten Datenstrom an einem Ausgang bereitstellt und an einem weiteren Ausgang Daten bereitstellt, die dem Eingang des Rechenwerks rückgeführt sind.

5. Vorrichtung nach Anspruch 4, **dadurch gekennzeichnet, daß** die Auswertevorrichtung ein Auswahlelement (37) zur Auswahl einer Anzahl von Bits des am Eingang liegenden Datenworts umfaßt, sowie ein zweites Exklusiv-Oder-Gatter (35) und ein Maskierungselement (39), wobei der Datenstrom vom Ausgang des Auswahlelements über das zweite Exklusiv-Oder-Gatter (35) und das Maskierungselement (39) zu einem Ausgang geführt ist.

6. Vorrichtung nach Anspruch 5, **dadurch gekennzeichnet, daß** dem zweiten Exklusiv-Oder-Gatter (35) ein weiteres Datensignal zugeführt ist.

7. Vorrichtung nach Anspruch 6, **dadurch gekennzeichnet, daß** die Auswahlvorrichtung ein Multiplexer-Element (43) umfaßt, dem als Eingangssignale die Ausgangssignale des Rechenwerks (3), des Auswahlelements (37) und des zweiten Exklusiv-Oder-Gatters (35) sowie ein Eingangssignal des zweiten Exklusiv-Oder-Gatters (35) zugeführt sind.

8. Vorrichtung nach Anspruch 1, **dadurch gekennzeichnet, daß** die Zwischenspeichervorrichtung zwei Registerelemente (15,17) umfaßt, die jeweils zum Speichern mehrerer, vorzugsweise einer der Anzahl der Stufen des Rechenwerks (3) entsprechenden Anzahl p, Datenworte der Wortbreite n ausgebildet sind.

9. Vorrichtung nach Anspruch 8, **dadurch gekennzeichnet, daß** eines der beiden Registerelemente (17) zwei Ausgänge (19) aufweist, wobei an einem Ausgang (19.2) der adressierte gespeicherte Wert und am anderen Ausgang (19.1) das Eingangssignal des Registerelements oder der adressierte gespeicherte Wert bereitgestellt ist.

10. Vorrichtung nach einem der Ansprüche 8 oder 9, **dadurch gekennzeichnet, daß** die Zwischenspeichervorrichtung ein drittes Registerelement (27) umfaßt, das entweder das Ausgangssignal (19.2) des zweiten Registerelements (17) oder das rückgeführte Signal (R) speichert.

11. Vorrichtung nach einem der Ansprüche 8 bis 10, **dadurch gekennzeichnet, daß** die Auswertevorrichtung ein weiteres Multiplexer-Element (33) umfaßt, dessen Ausgang mit einem Eingang des zweiten Exklusiv-Oder-Gatters (35) verbunden ist, und dessen zweiter Eingang mit einem Zwischenspeicherelement (31) verbunden ist, das das Ausgangssignal eines zweiten Registerelements (17) der Zwischenspeichervorrichtung (15, 17) oder das Dateneingangssignal zwischenspeichert.

12. Vorrichtung nach Anspruch 7, **dadurch gekennzeichnet, daß** ein Verknüpfungselement (45) vorgesehen ist, daß das Ausgangssignal des Mulitplexerelements (43) und das Ausgangssignal eines zweiten Registerelements (17) der Zwischenspeichervorrichtung (15, 17) verknüpft, und dieses Ausgangssignal dem Multiplexerelement (9) zuführt, dessen Ausgang mit dem Exklusiv-Oder-Gatter (11) verbunden ist.

13. Vorrichtung nach einem der vorhergehenden Ansprüche, **dadurch gekennzeichnet, daß** das Rechenwerk zur Ver-/Entschlüsselung von Daten der Wortbreite j≤n ausgelegt ist, wobei die Daten der Wortbreite n-j zur Aufnahme von unverschlüsselt zu übertragenden Steuerinformationen dienen.

**Claims**

1. Device for the implementation of a block cipher process with an encryption/decryption processor module, said encryption/decryption processor module being supplied with the data stream of word width n which is to be enciphered, the processor module comprising a plurality of encryption/decryption elements, each of said plurality of encryption/decryption elements forming a stage of a pipeline, the stages operating with different keys, **characterized in that** the processor module (3) operates with different operating modes such that the processor module (3) is preceded by a first exclusive OR gate (11), said first exclusive OR gate (11) performing the bitwise logical combination of two input words of word width n, one input of the first exclusive OR gate (11) being connected to a first multiplexer device (9) and the second input being connected to a second multiplexer device (13), the first multiplexer device (9) being supplied with the input data stream, one input of the second multiplexer device (13) being connected to an output of a temporary storage device (15, 17), said temporary storage device (15, 17) being adapted for the storage of a plurality of starting and initialization values for the encipherment process as well as of data input and feedback values.

2. Device according to claim 1, **characterized in that** each encryption/decryption element (5) - said encryption/decryption element (5) requiring keys or subkeys in order to perform its encryption/decryption (sub)operation(s) - is associated with a storage element (47) suitable for storing a key or subkey.

3. Device according to claim 2, **characterized in that** the storage element (47) is a dual-port storage device.

4. Device according to claim 1, **characterized in that** the output of the processor module (3) is connected to an evaluation device (33, 35, 37, 43, 39), said evaluation device (33, 35, 37, 43, 39) supplying the encrypted/decrypted data stream at one output and supplying, at a further output, data which is fed back to the input of the processor module.

5. Device according to claim 4, **characterized in that** the evaluation device comprises a selection element (37) for selecting a number of bits of the data word present at the input as well as a second exclusive OR gate (35) and a masking element (39), the data stream being routed from the output of the selection element via the second exclusive OR gate (35) and the masking element (39) to an output.

6. Device according to claim 5, **characterized in that** the second exclusive OR gate (35) is supplied with a further data signal.

7. Device according to claim 6, **characterized in that** the selection device comprises a multiplexer element (43), said multiplexer element (43) being supplied, as input signals, with the output signals of the processor module (3), of the selection element (37) and of the second exclusive OR gate (35) as well as with an input signal of the second exclusive OR gate (35).

8. Device according to claim 1, **characterized in that** the temporary storage device comprises two register elements (15, 17), each of said two register elements (15, 17) being adapted for the storage of a plurality - preferably a number p corresponding to the number of stages of the processor module (3) - of data words of word width n.

9. Device according to claim 8, **characterized in that** one of the two register elements (17) comprises two outputs (19), the addressed stored value being made available at one output (19.2) and the input signal of the register element or the addressed stored value being made available at the other output (19.1).

10. Device according to any one of claim 8 or 9, **characterized in that** the temporary storage device comprises a third register element (27), said third register element (27) storing either the output signal (19.2) of the second register element (17) or the feedback signal (R).

11. Device according to any one of claims 8 to 10, **characterized in that** the evaluation device comprises a further multiplexer element (33), the output of which is connected to an input of the second exclusive OR gate (35) and the second input of which is connected to a temporary storage element (31), said temporary storage element (31) temporarily storing the output signal of a second register element (17) of the temporary storage device (15, 17) or the data input signal.

12. Device according to claim 7, **characterized in that** a logic element (45) is provided, said logic element (45) logically combining the output signal of the multiplexer element (43) and the output signal of a second register element (17) of the temporary storage device (15, 17) and supplying said output signal to the multiplexer element (9), the output of which is connected to the exclusive OR gate (11).

13. Device according to any one of the preceding claims, **characterized in that** the processor module is designed for the encryption/decryption of data of word width j≤n the data of word width n-j being used to record control information which is to be transmitted in unencrypted form.

**Revendications**

1. Dispositif permettant de réaliser un procédé de chiffrage de blocs au moyen d'une unité de calcul de codage/ décodage, à laquelle est amené le flux de données à chiffrer de la largeur de mot n, l'unité de calcul disposant de plusieurs éléments de codage/décodage formant chacun un niveau d'un pipeline de calcul, les niveaux fonctionnant avec différents codes, **caractérisé en ce que** l'unité de calcul (3) fonctionne dans des modes d'exploitation différents, un premier élément OU-exclusif (11) étant placé en amont de l'unité de calcul, lequel exécute une liaison bit par bit de deux mots d'entrée présentant une largeur de mot n , une entrée de l'élément OU-exclusif (11) étant reliée avec un premier dispositif multiplexeur (9) et la deuxième entrée avec un deuxième dispositif multiplexeur (13), le flux de données d'entrée étant conduit au premier dispositif multiplexeur (9) et une entrée du deuxième dispositif multiplexeur (13) étant raccordée à une sortie d'un dispositif de mémorisation intermédiaire (15, 17) conçu pour mémoriser plusieurs valeurs de départ et d'initialisation pour le dispositif de chiffrage ainsi que des valeurs d'entrée de données et de réinjection.

2. Dispositif selon la revendication 1, **caractérisé en ce qu'**un élément de mémorisation (47) approprié pour mémoriser un code ou un sous code est assigné à chaque élément de codage/décodage (5) nécessitant des codes ou des sous codes pour exécuter son ou ses opérations (partielles) de codage/décodage.

3. Dispositif selon la revendication 1, **caractérisé en ce qu'**un élément de mémorisation (47) est une mémoire à double accès.

4. Dispositif selon la revendication 1, **caractérisé en ce que** la sortie de l'unité de calcul (3) est reliée à un dispositif d'analyse (33, 35, 37, 43, 39) qui fournit le flux des données codées/décodées sur une entrée, et fournit, sur une autre entrée, des données qui sont ramenées à l'entrée de l'unité de calcul.

5. Dispositif selon la revendication 4, **caractérisé en ce que** le dispositif d'analyse comprend un élément de sélection (37) permettant de sélectionner des bits du mot de données qui se trouve à l'entrée, ainsi qu'un deuxième élément OU-exclusif (35) et un élément de masquage (39), le flux de données étant véhiculé de la sortie de l'élément de sélection vers une sortie via le deuxième élément OU-exclusif (35) et l'élément de masquage (39).

6. Dispositif selon la revendication 5, **caractérisé en ce qu'**un autre signal de données est transmis au deuxième élément OU-exclusif (35).

7. Dispositif selon la revendication 6, **caractérisé en ce que** le dispositif de sélection comprend un élément multiplexeur (43) auquel les signaux de sortie de l'unité de calcul (3), de l'élément de sélection (37) et du deuxième élément OU-exclusif (35) ainsi que le signal d'entrée du deuxième élément OU-exclusif (35) sont transmis comme signaux d'entrée.

8. Dispositif selon la revendication 1, **caractérisé en c**e **que** le dispositif de mémorisation intermédiaire comprend deux éléments de registre (15, 17), conçus chacun pour mémoriser plusieurs mots de données de la largeur de mot n , ces mots étant de préférence d'un nombre p correspondant au nombre de niveaux de l'unité de calcul (3).

9. Dispositif selon la revendication 8, **caractérisé en ce qu'un** des deux éléments de registre (17) présente deux sorties (19), la valeur adressée mémorisée étant fournie sur l'une des entrées (19.2) et le signal d'entrée de l'élément de registre ou la valeur mémorisée adressée étant délivré sur l'autre entrée (19.1).

10. Dispositif selon une des revendications 8 ou 9, **caractérisé en ce que** le dispositif de mémorisation intermédiaire comprend un troisième élément de registre (27) qui mémorise soit le signal de sortie (19.2) du deuxième élément de registre (17) ou le signal retourné (R).

11. Dispositif selon une des revendications 8 à 10, **caractérisé en ce que** le dispositif d'analyse comprend un autre élément multiplexeur (33) dont la sortie est reliée à l'entrée du deuxième élément OU-exclusif, et dont la deuxième entrée est reliée avec un élément de mémorisation intermédiaire (31) qui mémorise temporairement le signal de sortie d'un deuxième élément de registre (17) du dispositif de mémorisation intermédiaire (15, 17) ou le signal d'entrée des données.

12. Dispositif selon la revendication 7, **caractérisé en ce qu'**un élément de liaison (45) est prévu, que le signal de sortie de l'élément de multiplexeur (43) et le signal de sortie d'un deuxième élément de registre (17) du dispositif de mémorisation intermédiaire (15, 17) sont liés, et que ce signal de sortie est transmis à l'élément de multiplexeur (9) dont la sortie est raccordée avec l'élément OU-exclusif (11).

13. Dispositif selon une des revendications précédentes, **caractérisé en ce qu'**une unité de calcul est conçue pour coder/décoder des données de largeur de mot j ≤ n, les données de la largeur de mot n-j servant pour enregistrer des informations de commande à transmettre sous une forme non codée.

Fig. 1

Startwerte für erneute Kontextinitialisierung

Regist.III

Regist.I

Regist.II

Temporäres Register

Startwerte

Dateneingang

EXOR

Ver-/Entschlüssel.-Pipeline

Auswahl der j höchstwertigen Bits SV(j)

Maskierung der j niederwertigsten Bits MASK(j)

EXOR

Datenausgang

Verschiebung/Konkatenation VK(j,k)

DualPort-RAM als Speicher für die (Sub-)Schlüssel

Eingang für (Sub-) Schlüssel

EP 0 986 872 B1